# EUROPÄISCHE PATENTSCHRIFT

(11) **EP 2 647 964 B1**
(45) Veröffentlichungstag und Bekanntmachung des Hinweises auf die Patenterteilung: **25.02.2015**
(21) Anmeldenummer: 12163274.9
(22) Anmeldetag: 05.04.2012
(51) Int. Cl.: G01D 5/245

(54) **Verfahren zur Codierung von Messinformationen über relative Positionszustände von bewegten Objekten in Gray-Codes**
Method for encoding measuring information of the relative positions of moving objects in Gray codes
Procédé destiné au codage d'informations de mesure à propos d'états de position relative d'objets mobiles en codage Gray

(43) Veröffentlichungstag der Anmeldung: 09.10.2013
(73) Patentinhaber: Siemens Aktiengesellschaft, 80333 München (DE)
(72) Erfinder: Wallner, Lorenz, 90766 Fürth (DE)

(56) Entgegenhaltungen:
- EP-A1- 1 731 876
- WO-A1-2004/090832
- DE-A1- 4 444 783

## Beschreibung

Die Erfindung betrifft ein Verfahren zur Codierung von Messinformationen über relative Positionszustände von bewegten Objekten in Gray-Codes mittels dreier Kanäle, eine Vorrichtung zur Codierung von Messinformationen über relative Positionszustände von bewegten Objekten in Gray-Codes mittels dreier Kanäle sowie ein Computerprogrammprodukt.

**Die** DE 44 44 783 A1 **offenbart einen Graycode-Dekodierschaltkreis für ein Harddisklaufwerk.**

Im industriellen Umfeld werden Inkrementalencoder zur Messung von Wegstrecken, Geschwindigkeiten oder Drehwinkel an Werkzeugmaschinen, in der Handhabungs- und Automatisierungstechnik und an Mess- und Prüfeinrichtungen eingesetzt. Inkrementalencoder sind somit Sensoren, welche relative Lageänderungen oder relative Winkeländerungen von sich bewegenden Objekten erfassen. Das jeweils zugrunde liegende Inkrementalverfahren ist derart präzise, dass selbst bei Einsatz von Inkrementalencodern bei mehrgliedrigen Automatisierungskomponenten bei der Erfassung einer relativen Positionsänderung Messgenauigkeiten bis in den Mikrometerbereich möglich sind.

Inkrementalencoder besitzen eine Maßverkörperung mit einer sich wiederholenden, periodischen Zählspur. Die Messung beruht auf einer Richtungsbestimmung und einer Zählung. Am häufigsten werden rotierende optoelektronische Drehgeber verwendet.

Bei einem Inkrementalencoder, zum Beispiel in Form eines optoelektronischen Drehgebers, bei dem auf dem Rand einer runden Metall- oder Glasscheibe, einer sogenannten Strichscheibe, lichtdurchlässige Schlitze (Segmente oder Inkremente) angeordnet sind, erfolgt eine Erfassung einer relativen Positionsänderung durch eine Auswertung von Signalen, welche mithilfe von Einweglichtschranken und einer Folgeelektronik erzeugt wurden. Dabei bestimmt die Anzahl der Inkremente der Strichscheibe die Anzahl der Messschritte pro Umdrehung der Strichscheibe. Für jeden Messschritt, bestimmt durch die Anzahl der Inkremente auf der Strichscheibe, stellt der Inkrementalencoder durch eine optoelektronische Umwandlung ein elektrisches Signal für eine nachfolgende Auswertung durch eine Folgeelektronik zur Verfügung.

Im Stand der Technik erzeugen herkömmliche Inkrementalencoder auf zwei Kanälen am Ausgang ein sogenanntes Gray-Code-Signal. Der Code-Code hat die Eigenschaft, dass sich zwischen benachbarten Gray-Codes nur ein Bit ändert.

Da Änderungen der Positionen sich bewegender Objekte im ausgeschalteten Zustand des Inkrementalencoders nicht erfasst werden können, muss nach dem Einschalten zunächst ein Referenzpunkt bestimmt werden, auf den sich die nachfolgenden relativen Positionsänderungen beziehen. Im Stand der Technik geben daher manche Inkrementalencoder pro voller Umdrehung der Strichscheibe noch ein Referenzsignal auf einen dritten Kanal aus. Typischerweise sind die Inkrementalencoder so ausgelegt, dass Flanken dieses Referenzsignals exakt gleichzeitig zu den zugehörigen Flanken des Signals auf dem ersten bzw. zweiten Kanal ausgegeben werden. Aufgrund von Toleranzen in den verwendeten Bauteilen und unsymmetrischen Leitungsverzögerungen kann aber nicht garantiert werden, dass diese formal gleichzeitigen Flanken in der nachgeschalteten Auswertelogik auch wirklich gleichzeitig empfangen und ausgewertet werden können, wodurch eine Inkrement-genaue Referenzierung mittels dieses speziellen Referenzsignals nicht so ohne weiteres sichergestellt ist. Zusätzlich ist der Puls auf dem Referenzsignal typischerweise nur halb so lang wie die Pulse auf den beiden anderen Leitungen, wodurch die symmetrische Filterung aller drei Signale erschwert wird.

Der Erfindung liegt die Aufgabe zugrunde, ein verbessertes Verfahren zur Codierung von Messinformationen über relative Positionszustände von bewegten Objekten in Gray-Codes mittels dreier Kanäle, eine verbesserte Vorrichtung zur Codierung von Messinformationen über relative Positionszustände von bewegten Objekten in Gray-Codes mittels dreier Kanäle sowie ein verbessertes Computerprogrammprodukt zu schaffen.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird ein Verfahren zur Codierung von Messinformationen über relative Positionszustände von bewegten Objekten in Gray-Codes mittels dreier Kanäle geschaffen, wobei
- der erste Kanal der drei Kanäle erste Signale aufweist,
- der zweite Kanal der drei Kanäle zweite Signale aufweist,
- der dritte Kanal der drei Kanäle dritte Signale aufweist,
wobei die dritten Signale ausschließlich Signale umfassen, welche zu vorbestimmten Zeitpunkten die ersten Signale oder die zweiten Signale identisch ersetzen, wobei an diesen vorbestimmten Zeitpunkten die dritten Signale einen Referenzpunkt beschreiben, wobei der Referenzpunkt ein Bezugspunkt für die relativen Positionszustände ist.

Dadurch wird das Schema des Gray-Codes bei der digitalen Erfassung des Referenzpunktes auf dem dritten Kanal nicht unterbrochen. Dies kann den Vorteil haben, dass die Position des Referenzpunktes immer exakt einem einzigen Zählschritt zugeordnet werden kann. Die Gefahr, dass zum Beispiel durch unsymmetrische Leitungsverzögerung, Fertigungstoleranzen im Inkrementalencoder usw. das Referenzsignal einem vorherigen oder nächsten Zählimpuls zugeordnet wird, besteht nicht. Somit sind keine weiteren Maßnahmen erforderlich, um zu verhindern, dass eine nachfolgende Auswertelogik das Referenzsignal einem vorherigen oder einem nachfolgenden Zählimpuls zuordnet.

Eine nachgeschaltete Auswertelogik ist daher imstande, zum Zwecke einer Referenzierung oder einer Synchronisation von zum Beispiel Automatisierungskomponenten dieses Referenzsignal eindeutig zu identifizieren. Der Inkrementalencoder zeichnet das Referenzsignal besonders aus, sodass die durch das Referenzsignal codierte Position von der nachgeschalteten Auswertelogik eindeutig zur Referenzierung bzw. Synchronisation verwendet werden kann.

In diesem Kontext wird ein Zählimpuls, welcher auch als "Inkrement" bezeichnet wird, durch einen Zustandwechsel einer der Signale auf einem der drei Kanäle verstanden. Eine Aufaddierung der Zählimpulse ergibt einen bestimmten Zählerstand, welcher einer Anzahl bestimmter Positionierungsschritte entspricht. Aus einer bestimmten Anzahl von Zählimpulsen pro Zeiteinheit ließe sich z.B. die Drehzahl einer rotierenden Komponente ermitteln. Unterscheidet man innerhalb einer Signalsequenz zwischen "positiven" und "negativen" Inkrementen, so kann man aus dem Vorzeichen des jeweiligen Inkrements schließen, in welche Richtung eine relative Positionsänderung eines bewegten Objekts erfolgt ist.

Nach einer Ausführungsform der Erfindung weisen die ersten Signale erste Signalbreiten auf und die zweiten Signale zweite Signalbreiten und die dritten Signale dritte Signalbreiten, wobei
- die dritten Signalbreiten so groß wie die ersten Signalbreiten sind und/oder
- die dritten Signalbreiten so groß wie die zweiten Signalbreiten sind.

Da das Referenzsignal auf dem dritten Kanal in dem beschriebenen Inkrementalverfahren genauso breit ist wie die Signale auf dem ersten und/oder dem zweiten Kanal, kann die Auswertelogik für den dritten Kanal hinsichtlich Filterzeiten und Empfindlichkeit identisch zu einer Auswertelogik für den ersten und/oder zweiten Kanal ausgelegt werden. Die Auswertelogik für den dritten Kanal benötigt somit keinen empfindlicheren bzw. schnelleren Signalempfänger, zum Beispiel mit doppelter Frequenz. Ebenso ist eine Sonderbehandlung bei einer Filterung zum Zwecke der Störunterdrückung nicht notwendig.

Nach einer Ausführungsform der Erfindung weisen die ersten Signale erste Zustandswechsel und die zweiten Signale zweite Zustandswechsel und die dritten Signale dritte Zustandswechsel auf.

Die ersten, zweiten und dritten Zustandswechsel lassen sich in vorteilhafter Weise als Grundlage zur Realisierung eines Gray-Codes verwenden, wenn der Inkrementalencoder und die nachgeschaltete Auswertelogik so ausgelegt sind, dass die Zustandswechsel nicht gleichzeitig auf dem ersten, zweiten bzw. dritten Kanal ausgegeben werden.

Nach einer Ausführungsform der Erfindung liegt
- ein dritter Zustandswechsel zwischen zwei benachbarten ersten Zustandswechseln, im Falle, dass die dritten Signale zu den vorbestimmten Zeitpunkten die zweiten Signale ersetzen, oder
- ein dritter Zustandswechsel zwischen zwei benachbarten zweiten Zustandswechseln, im Falle, dass die dritten Signale zu den vorbestimmten Zeitpunkten die ersten Signale ersetzen.

Dies kann den Vorteil haben, dass bei der Codierung des Referenzpunkts ebenso die Gray-Codierung angewandt werden kann wie bei der Codierung der relativen Positionsänderungen auf dem ersten und zweiten Kanal. Zur Erfassung des Referenzpunktes ist eine Abweichung von dem Gray-Code-Schema nicht erforderlich. Der einschrittige Gray-Code, bei dem bei einem Wechsel von einem Wert zum nächsten sich jeweils nur ein einziges Datencodebit ändert, kann somit auch bei der digitalen Erfassung der Messposition des Referenzpunktes verwendet werden. Dadurch kann konsequenterweise eine nachfolgende Auswertelogik erheblich vereinfacht werden.

Gleichzeitig wird die Anforderung an eine Genauigkeit bei einer Fertigung zum Beispiel von Strichscheiben mit einem Strichmuster aus lichtdurchlässigen Inkrementen und lichtundurchlässigen Segmenten, zum Beispiel bei einem Inkrementaldrehgeber, deutlich reduziert. Da eine Gleichzeitigkeit von Signalen auf dem ersten Kanal und auf dem dritten Kanal bzw. auf dem zweiten Kanal und auf dem dritten Kanal nicht gefordert wird, ist zum Beispiel für eine identische Anzahl von Zählimpulsen pro Umdrehung eine geringere Genauigkeit bei der Fertigung der Strichscheiben mit dem Strichmuster hinreichend. Ebenso können bei gleicher Genauigkeit Strichscheiben mit mehr Inkrementen pro Umdrehung gefertigt werden, ohne dass das Auflösungsvermögen in einer beeinträchtigenden Weise für eine nachfolgende Auswertung durch eine Auswertelogik reduziert wird.

Nach einer Ausführungsform der Erfindung umfasst das Verfahren ferner eine Auswertung der Messinformationen, wobei für die Auswertung ein gleichzeitiges Erfassen der Signale der drei Kanäle stattfindet.

Dadurch können alle drei Kanäle gleichwertig durch eine Auswertelogik einheitlich ausgewertet werden. Dies hat den Vorteil, dass der dritte Kanal zur digitalen Erfassung des Referenzpunktes ohne eine Sonderbehandlung, wie zum Beispiel eine Frequenzverdopplung des Signalempfängers zur Erhöhung des Auflösungsvermögens, erforderlich ist. Maßnahmen zur Störunterdrückung, z.B. der Einsatz eines digitalen Filters, können auf alle drei Kanäle gleichermaßen angewendet werden. Eine eventuell durch die Filterung verursachte Totzeit wirkt sich dann identisch auf alle Kanäle aus, und kann damit für die weitergehende Verarbeitung ignoriert werden.

Nach einer Ausführungsform der Erfindung umfasst die Auswertung eine erste Auswertung der ersten Zustandswechsel und eine zweite Auswertung der zweiten Zustandswechsel und eine dritte Auswertung der dritten Zustandswechsel der erfassten Signale, wobei
- die dritte Auswertung mit der ersten Auswertung identisch ist, im Falle, dass die dritten Signale zu den vorbestimmten Zeitpunkten die ersten Signale ersetzen, oder
- die dritte Auswertung mit der zweiten Auswertung identisch ist, im Falle, dass die dritten Signale zu den vorbestimmten Zeitpunkten die zweiten Signale ersetzen.

Dies kann den Vorteil haben, dass die Auswertelogik hinsichtlich ihrer Komplexität wesentlich verringert werden kann, sodass die Effizienz einer anschließenden Decodierung erheblich gesteigert werden kann.

In einem weiteren Aspekt betrifft die Erfindung ein Verfahren zur Auswertung von codierten Messinformationen über relative Positionszustände von bewegten Objekten, wobei die Messinformationen in Gray-Codes gemäß Anspruch 1 codiert sind, wobei das Verfahren einen Empfang der Messinformationen und eine Auswertung der Messinformationen umfasst, wobei der Empfang der Messinformationen durch ein gleichzeitiges Erfassen der Signale der drei Kanäle erfolgt.

In einem weiteren Aspekt betrifft die Erfindung ein Computerprogrammprodukt mit von einem Prozessor ausführbaren Instruktionen zur Durchführung der obig beschriebenen Verfahren.

In einem weiteren Aspekt betrifft die Erfindung eine Vorrichtung zur Codierung von Messinformationen über relative Positionszustände von bewegten Objekten in Gray-Codes mittels dreier Kanäle, wobei
- der erste Kanal der drei Kanäle erste Signale aufweist,
- der zweite Kanal der drei Kanäle zweite Signale aufweist,
- der dritte Kanal der drei Kanäle dritte Signale aufweist,
wobei die dritten Signale ausschließlich Signale umfassen, welche zu vorbestimmten Zeitpunkten die ersten Signale oder die zweiten Signale identisch ersetzen, wobei an diesen vorbestimmten Zeitpunkten die dritten Signale einen Referenzpunkt beschreiben, wobei der Referenzpunkt ein Bezugspunkt für die relativen Positionszustände ist.

In einem weiteren Aspekt betrifft die Erfindung eine Vorrichtung zur Auswertung von codierten Messinformationen über relative Positionszustände von bewegten Objekten, wobei die Messinformationen in Gray-Codes mittels dreier Kanäle codiert sind, wobei
- der erste Kanal der drei Kanäle erste Signale aufweist,
- der zweite Kanal der drei Kanäle zweite Signale aufweist,
- der dritte Kanal der drei Kanäle dritte Signale aufweist,
wobei die dritten Signale ausschließlich Signale umfassen, welche zu vorbestimmten Zeitpunkten die ersten Signale oder die zweiten Signale identisch ersetzen, wobei an diesen vorbestimmten Zeitpunkten die dritten Signale einen Referenzpunkt beschreiben, wobei der Referenzpunkt ein Bezugspunkt für die relativen Positionszustände ist, wobei die Vorrichtung dazu ausgebildet ist, die Messinformationen zu empfangen und die Messinformationen auszuwerten, wobei die Vorrichtung ferner dazu ausgebildet ist, den Empfang der Messinformationen durch ein gleichzeitiges Erfassen der Signale der drei Kanäle durchzuführen.

Im Folgenden werden bevorzugte Ausführungsformen der Erfindung anhand der folgenden Zeichnungen näher erläutert.

Es zeigen:
- FIG 1: eine Rechteck-Signalfolge auf dem ersten, zweiten und dritten Kanal, wobei auf dem dritten Kanal eine Codierung einer Referenzposition unter Einhaltung eines Gray-Code-Schemas erfolgt,
- FIG 2: eine vereinfachte Darstellung eines Inkrementalencoders, insbesondere einer Strichscheibe eines inkrementalen Drehgebers.

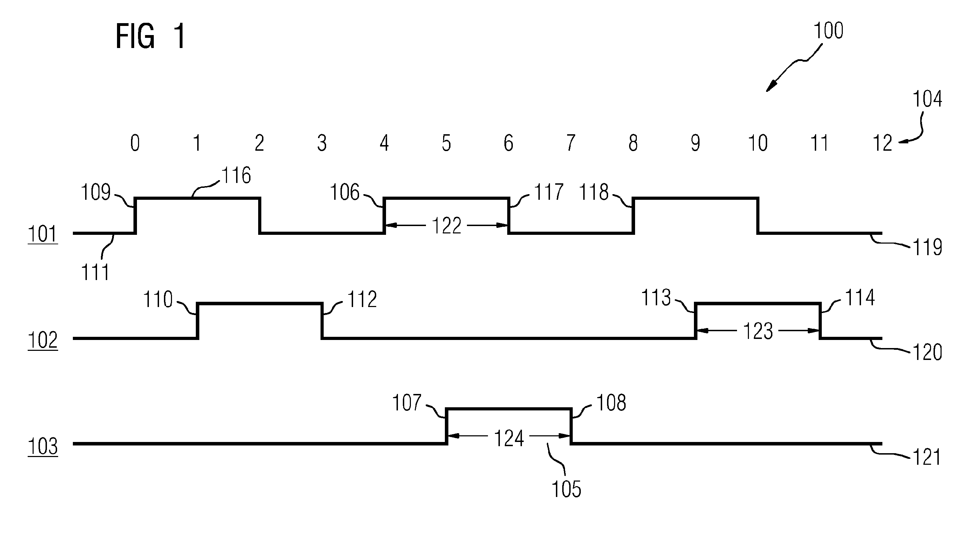

Die FIG 1 zeigt eine Folge 100 von Signalen in Rechteckform auf einem ersten Kanal 101, einem zweiten Kanal 102 und einem dritten Kanal 103. Auf dem ersten Kanal 101 und dem zweiten Kanal 102 werden dabei relative Positionsänderungen von bewegten Objekten mittels Zustandswechseln, zum Beispiel 109 und 110, zwischen zwei möglichen Zuständen, einem Low-Pegel 111 und einem High-Pegel 116, codiert. Das Rechtecksignal 105 auf dem dritten Kanal 103 enthält in codierter Form eine Messinformation über einen vordefinierten Referenzpunkt.

In FIG 1 ersetzt das Rechtecksignal 105 auf dem dritten Kanal 103 ein eigentlich zu erwartendes Rechtecksignal auf dem zweiten Kanal 102. In Figur 1 hat das Rechtecksignal 105 auf dem dritten Kanal 103 dieselbe Signalbreite 124 wie die Rechtecksignale 120 auf den zweiten Kanal 102. Dies ermöglicht einer nachfolgenden Auswertelogik die Zustandswechsel 107 und 108 des Rechtecksignals 105 auf dem dritten Kanal 103 auf dieselbe Weise auszuwerten wie Zustandswechsel 110, 112, 113 und 114 von Rechtecksignalen 120 auf dem zweiten Kanal 102.

FIG 1 veranschaulicht, dass gemäß dem beschriebenen Inkrementalverfahren eine gleichzeitige Inzidenz von Zustandswechseln von Signalen 119 auf dem ersten Kanal 101 und dem Referenzsignal 105 auf dem dritten Kanal 103 sowie eine gleichzeitige Inzidenz von Zustandswechseln 110, 112, 113 und 114 von Signalen 120 auf dem zweiten Kanal 102 und von Zustandswechseln 107 und 108 des Referenzsignals 105 auf dem dritten Kanal 103 ausgeschlossen ist.

Bei gleichzeitigem Auslesen der Zustände 111, 116 bzw. Zustandswechseln aller drei Kanäle 101, 102 und 103 verändert sich der durch die Zustandswechsel dargestellte Gray-Code bei Veränderung der Position um einen Schritt um jeweils nur ein einziges Datencodebit. Bei entsprechender Auswertelogik kann eine Veränderung nur eines Datencodebits als ein Zählimpuls gewertet werden. Eine Aufaddierung der Zählimpulse könnte einem bestimmten Zählerstand 104 entsprechen, wie er in Fig. 1 dargestellt ist. Eine Kombination von registrierten Zählimpulsen mit einer Zeiteinheit könnte von einer nachfolgenden Auswertlogik zur Bestimmung einer relativen Geschwindigkeit von Positionsänderungen eines bewegten Objekts verwendet werden.

Das beschriebene Inkrementalverfahren ermöglicht somit die Einhaltung des einschrittigen Gray-Codes auch bei der Codierung einer Referenzposition auf dem dritten Kanal 103. Die Auswertung des Referenzsignals 105 auf dem dritten Kanal 103 benötigt für ihre Auswertung durch eine Auswertelogik keine Sonderbehandlung, wie zum Beispiel eine Verwendung eines Signalempfängers mit doppelter Frequenz zur Erhöhung des Auflösungsvermögens. Die Komplexität der nachfolgenden Auswertelogik kann somit erheblich verringert werden. In dem beschriebenen Inkrementalverfahren besteht keine Gefahr, dass die Auswertelogik das Referenzsignal 105 einem vorherigen oder nachfolgenden Signal 119, 120 mit codierter Messinformation über eine relative Positionsänderung eines bewegten Objektes zuordnet. Das beschriebene Inkrementalverfahren stellt für eine Auswertelogik ein klar definiertes und deutlich von den anderen Signalen 119, 120 abgegrenztes Referenzsignal 105 zur Verfügung, sodass die Genauigkeit einer Referenzierung bzw. Synchronisation von zum Beispiel mehreren Automatisierungskomponenten einer Automatisierungsanlage signifikant erhöht wird.

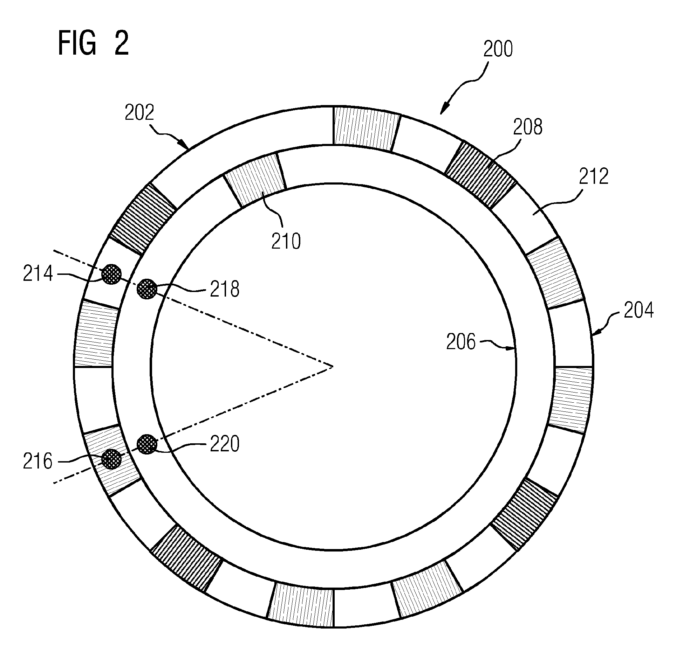

Die FIG 2 zeigt eine Komponente eines Inkrementalencoders, speziell eine Strichscheibe 202 eines inkrementalen Drehgebers 200. Die Strichscheibe 202 weist an ihrem Rand zwei verschiedene Spuren 204 und 206 aus, die über die Sensoren 214, 216, 218 und 220 abgetastet werden. Aus den Ausgaben dieser Sensoren können über eine logische Verknüpfung die Signale für die Kanäle 101, 102 und 103 der Figur 1 erzeugt werden.

Auf der Spur 206 befinden sich die aus den lichtdurchlässigen Inkrementen 208 und den lichtundurchlässigen Segmenten 212 gebildete sogenannte Inkrementalspur. Sie dient zur Codierung der relativen Positionsänderungen der bewegten Objekte.

Die Spur 206 weist nur ein einziges lichtdurchlässiges Inkrement 210 auf. Diese Inkrementalspur dient zur Bestimmung und Codierung des Referenzpunktes.

Bei einer kompletten Umdrehung der Strichscheibe 202 werden so viele elektrische Signale ausgegeben, wie Inkremente auf der Strichscheibe vorhanden sind. Die Strichscheibe wird in der Regel fest mit einer nach außen geführten Welle, die in FIG 2 nicht dargestellt ist, gekoppelt. Diese wird beispielsweise an einer rotierenden Automatisierungskomponente fixiert, deren relative Winkelveränderungen mittels eines inkrementalen Drehgebers gemessen werden sollen.

Mittels Lichtsensoren 214, 216, 218 und 220 erfolgt dann eine photoelektrische Abtastung der Inkrementalspuren 204 und 206 der Strichscheibe 202. Die Signalbildung wird mithilfe des Durchlichtverfahrens realisiert.

Nachfolgend wird dann eine Umwandlung der von den Lichtsensoren 214, 216, 218 und 220 empfangenen Lichtsignale in elektrische Signale durchgeführt.

In einer Ausführung wird dann auf dem ersten Kanal 101 eine logische ODER-Verknüpfung der Ausgaben der Sensoren 214 und 218 ausgegeben. Auf dem zweiten Kanal 102 wird direkt die Ausgabe des Sensors 216 und auf dem dritten Kanal wird direkt die Ausgabe des Sensors 220 ausgegeben.

Bei Bedarf kann auf den Kanälen 101, 102 und 103 auch ein Signalspiel ausgegeben werden, welches dem Signalspiel eines herkömmlichen Inkrementalencoders entspricht. Dafür wird auf dem ersten Kanal 101 die logische ODER-Verknüpfung der Ausgaben der Sensoren 214 und 218 ausgegeben. Auf dem zweiten Kanal 102 wird die logische ODER-Verknüpfung der Sensoren 216 und 220 ausgegeben. Auf dem dritten Kanal wird direkt die Ausgabe des Sensors 220 ausgegeben. Dabei bedeutet "Signalspiel" eine durch eine vordefinierte logische Verknüpfung von Signalen verschiedener Kanäle erzeugte neue Signalsequenz auf einem der Kanäle und/oder auf einem weiteren Kanal.

Dass das Referenzsignal 105 in Figur 1 auf dem dritten Kanal 103 das entsprechende Signal auf dem Kanal 102 ersetzt, wird in der in Figur 2 dargestellten Ausführungsform dadurch realisiert, dass die Inkrementalspur 204 an der Stelle, wo die Inkrementalspur 206 ein lichtdurchlässiges Inkrement 210 aufweist, einen lichtundurchlässigen Abschnitt aufweist. Die in FIG 2 dargestellte Ausführungsform eines inkrementalen Drehgebers ermöglicht somit die Realisierung einer konsequenten Anwendung des Gray-Codes auch bei einer Referenzierung von relativen Positionsänderungen sich bewegender Objekte sowie bei einer Synchronisation der sich bewegenden Objekte mittels eines Referenzpunktes.

## Patentansprüche

1. Verfahren zur Codierung von Messinformationen über relative Positionszustände von bewegten Objekten in Gray-Codes mittels dreier Kanäle (101, 102, 103), wobei
- der erste Kanal (101) der drei Kanäle (101, 102, 103) erste Signale (119) aufweist,
- der zweite Kanal (102) der drei Kanäle (101, 102, 103) zweite Signale (120) aufweist,
- der dritte Kanal (103) der drei Kanäle (101, 102, 103) dritte Signale (121) aufweist,
wobei die dritten Signale (121) ausschließlich Signale (105) umfassen, welche zu vorbestimmten Zeitpunkten die ersten Signale (119) oder die zweiten Signale (120) identisch ersetzen, wobei an diesen vorbestimmten Zeitpunkten die dritten Signale (121) einen Referenzpunkt beschreiben, wobei der Referenzpunkt ein Bezugspunkt für die relativen Positionszustände ist.

2. Verfahren nach Anspruch 1, wobei die ersten Signale (119) erste Signalbreiten (122) aufweisen und die zweiten Signale (120) zweite Signalbreiten (123) aufweisen und die dritten Signale (121) dritte Signalbreiten (124) aufweisen, wobei
- die dritten Signalbreiten (124) so groß wie die ersten Signalbreiten (122) sind und/oder
- die dritten Signalbreiten (124) so groß wie die zweiten Signalbreiten (123) sind.

3. Verfahren nach einem der vorhergehenden Ansprüche 1 bis 2, wobei die ersten Signale (119) erste Zustandswechsel (106, 109) und die zweiten Signale (120) zweite Zustandswechsel (110, 112) und die dritten Signale (121) dritte Zustandswechsel (107, 108) aufweisen.

4. Verfahren nach Anspruch 3, wobei der dritte Kanal (103) zu einem bestimmten Zeitpunkt einen dritten Zustandswechsel (107, 108) nur dann aufweist, wenn der erste Kanal (101) zu diesem Zeitpunkt frei von einem der ersten Zustandswechsel (109) ist und der zweite Kanal (102) zu diesem Zeitpunkt frei von einem der zweiten Zustandswechsel (110, 112, 113, 114) ist.

5. Verfahren nach Anspruch 3 oder 4 , wobei
- ein dritter Zustandswechsel (107, 108) zwischen zwei benachbarten ersten Zustandswechseln (106, 117, 118) liegt, im Falle, dass die dritten Signale (105) zu den vorbestimmten Zeitpunkten die zweiten Signale (120) ersetzen, oder
- ein dritter Zustandswechsel (107, 108) zwischen zwei benachbarten zweiten Zustandswechseln liegt, im Falle, dass die dritten Signale (105) zu den vorbestimmten Zeitpunkten die ersten Signale (119) ersetzen.

6. Verfahren nach einem der vorigen Ansprüche, wobei das Verfahren ferner eine Auswertung der Messinformation umfasst, wobei für die Auswertung ein gleichzeitiges Erfassen der Signale (119, 120, 121) der drei Kanäle (101, 102, 103) stattfindet.

7. Verfahren nach Anspruch 6, wobei die Auswertung eine erste Auswertung der ersten Zustandswechsel (106, 109, 117, 118) und eine zweite Auswertung der zweiten Zustandswechsel (110, 112, 113, 114) und eine dritte Auswertung der dritten Zustandswechsel (107, 108) der erfassten Signale umfasst, wobei
- die dritte Auswertung mit der ersten Auswertung identisch ist, im Falle, dass die dritten Signale (105) zu den vorbestimmten Zeitpunkten die ersten Signale (119) ersetzen, oder
- die dritte Auswertung mit der zweiten Auswertung identisch ist, im Falle, dass die dritten Signale (105) zu den vorbestimmten Zeitpunkten die zweiten Signale (120) ersetzen.

8. Verfahren zur Auswertung von codierten Messinformationen über relative Positionszustände von bewegten Objekten, wobei die Messinformationen in Gray-Codes gemäß Anspruch 1 kodiert sind, wobei das Verfahren einen Empfang der Messinformationen und eine Auswertung der Messinformationen umfasst, wobei der Empfang der Messinformationen durch ein gleichzeitiges Erfassen der Signale (119, 120, 121) der drei Kanäle (101, 102, 103) erfolgt.

9. Computerprogrammprodukt mit von einem Prozessor ausführbaren Instruktionen zur Durchführung der Verfahrensschritte gemäß den vorigen Ansprüchen.

10. Vorrichtung zur Codierung von Messinformationen über relative Positionszustände von bewegten Objekten in Gray-Codes mittels dreier Kanäle (101, 102, 103), wobei
- der erste Kanal (101) der drei Kanäle (101, 102, 103) erste Signale (119) aufweist,
- der zweite Kanal der drei Kanäle (101, 102, 103) zweite Signale (120) aufweist,
- der dritte Kanal der drei Kanäle (101, 102, 103) dritte
Signale (121) aufweist,
wobei die dritten Signale (121) ausschließlich Signale (105) umfassen, welche zu vorbestimmten Zeitpunkten die ersten Signale (119) oder die zweiten Signale (120) identisch ersetzen, wobei an diesen vorbestimmten Zeitpunkten die dritten Signale (105) einen Referenzpunkt beschreiben, wobei der Referenzpunkt ein Bezugspunkt für die relativen Positionszustände ist.

11. Vorrichtung zur Auswertung von codierten Messinformationen über relative Positionszustände von bewegten Objekten, wobei die Messinformationen in Gray-Codes mittels dreier Kanäle (101, 102, 103) codiert sind, wobei
- der erste Kanal (101) der drei Kanäle (101, 102, 103) erste Signale (119) aufweist,
- der zweite Kanal (102) der drei Kanäle (101, 102, 103) zweite Signale (120) aufweist,
- der dritte Kanal (103) der drei Kanäle (101, 102, 103) dritte Signale (121) aufweist,
wobei die dritten Signale (121) ausschließlich Signale (105) umfassen, welche zu vorbestimmten Zeitpunkten die ersten Signale (119) oder die zweiten Signale (120) identisch ersetzen, wobei an diesen vorbestimmten Zeitpunkten die dritten Signale (105) einen Referenzpunkt beschreiben, wobei der Referenzpunkt ein Bezugspunkt für die relativen Positionszustände ist, wobei die Vorrichtung dazu ausgebildet ist, die Messinformationen zu empfangen und die Messinformationen auszuwerten, wobei die Vorrichtung ferner dazu ausgebildet ist, den Empfang der Messinformationen durch ein gleichzeitiges Erfassen der Signale (119, 120, 121) der drei Kanäle (101, 102, 103) durchzuführen.

## Claims

1. Method for encoding measuring information of the relative positions of moving objects in Gray codes by means of three channels (101, 102, 103), wherein
- the first channel (101) of the three channels (101, 102, 103) has first signals (119),
- the second channel (102) of the three channels (101, 102, 103) has second signals (120),
- the third channel (103) of the three channels (101, 102, 103) has third signals (121),
wherein the third signals (121) comprise exclusively signals (105) which at predetermined points in time identically replace the first signals (119) or the second signals (120), wherein at said predetermined points in time the third signals (121) describe a reference point, wherein the reference point is a benchmark for the relative positions.

2. Method according to claim 1, wherein the first signals (119) have first signal widths (122) and the second signals (120) have second signal widths (123) and the third signals (121) have third signal widths (124), wherein
- the third signal widths (124) are as large as the first signal widths (122) and/or
- the third signal widths (124) are as large as the second signal widths (123).

3. Method according to one of the preceding claims 1 to 2, wherein the first signals (119) have first state changes (106, 109) and the second signals (120) have second state changes (110, 112) and the third signals (121) have third state changes (107, 108).

4. Method according to claim 3, wherein the third channel (103) has a third state change (107, 108) at a predetermined point in time only if the first channel (101) is free from one of the first state changes (109) at said point in time and the second channel (102) is free from one of the second state changes (110, 112, 113, 114) at said point in time.

5. Method according to claim 3 or 4, wherein
- a third state change (107, 108) lies between two adjacent first state changes (106, 117, 118), in the event that the third signals (105) replace the second signals (120) at the predetermined points in time,
or
- a third state change (107, 108) lies between two adjacent second state changes, in the event that the third signals (105) replace the first signals (119) at the predetermined points in time.

6. Method according to one of the preceding claims, wherein the method further comprises an evaluation of the measuring information, wherein a simultaneous acquisition of the signals (119, 120, 121) of the three channels (101, 102, 103) takes place for the evaluation.

7. Method according to claim 6, wherein the evaluation comprises a first evaluation of the first state changes (106, 109, 117, 118) and a second evaluation of the second state changes (110, 112, 113, 114) and a third evaluation of the third state changes (107, 108) of the acquired signals, wherein
- the third evaluation is identical to the first evaluation, in the event that the third signals (105) replace the first signals (119) at the predetermined points in time,
or
- the third evaluation is identical to the second evaluation, in the event that the third signals (105) replace the second signals (120) at the predetermined points in time.

8. Method for evaluating encoded measuring information of relative positions of moving objects, wherein the measuring information is encoded in Gray codes according to claim 1, wherein the method comprises a receipt of the measuring information and an evaluation of the measuring information, wherein the receipt of the measuring information takes place by a simultaneous acquisition of the signals (119, 120, 121) of the three channels (101, 102, 103).

9. Computer program product having instructions that can be executed by a processor for performing the method steps according to the preceding claims.

10. Apparatus for encoding measuring information of relative positions of moving objects in Gray codes by means of three channels (101, 102, 103), wherein
- the first channel (101) of the three channels (101, 102, 103) has first signals (119),
- the second channel of the three channels (101, 102, 103) has second signals (120),
- the third channel of the three channels (101, 102, 103) has third signals (121),
wherein the third signals (121) exclusively comprise signals (105) which at predetermined points in time identically replace the first signals (119) or the second signals (120), wherein at said predetermined points in time the third signals (105) describe a reference point, wherein the reference point is a benchmark for the relative positions.

11. Apparatus for evaluating encoded measuring information of relative positions of moving objects, wherein the measuring information is encoded in Gray codes by means of three channels (101, 102, 103), wherein
- the first channel (101) of the three channels (101, 102, 103) has first signals (119),
- the second channel (102) of the three channels (101, 102, 103) has second signals (120),
- the third channel (103) of the three channels (101, 102, 103) has third signals (121),
wherein the third signals (121) exclusively comprise signals (105) which at predetermined points in time identically replace the first signals (119) or the second signals (120), wherein at said predetermined points in time the third signals (105) describe a reference point, wherein the reference point is a benchmark for the relative positions, wherein the apparatus is designed to receive the measuring information and to evaluate the measuring information, wherein the apparatus is further designed to perform the receipt of the measuring information by a simultaneous acquisition of the signals (119, 120, 121) of the three channels (101, 102, 103).

## Revendications

1. Procédé de codage d'informations de mesure sur des états de position relatifs d'objets mobiles en code Gray au moyen de trois canaux (101, 102, 103), dans lequel
- le premier canal (101) des trois canaux (101, 102, 103) a des premiers signaux (119),
- le deuxième canal (102) des trois canaux (101, 102, 103) a des deuxièmes signaux (120),
- le troisième canal (103) des trois canaux (101, 102, 103) a des troisièmes signaux (121),
dans lequel les troisièmes signaux (121) comprennent exclusivement des signaux ( 105 ), qui, à des instants déterminés à l'avance, remplacent identiquement les premiers signaux (119) ou les deuxièmes signaux (120), les troisièmes signaux (121) décrivant, à ces instants déterminés à l'avance, un point de référence, le point de référence étant un point de repère pour les états de position relatifs.

2. Procédé suivant la revendication 1, dans lequel les premiers signaux (119) ont des premières largeurs (122) et les deuxièmes signaux (120) ont des deuxièmes largeurs (123) et les troisièmes signaux (121) ont des troisièmes largeurs (124), dans lequel
- les troisièmes largeurs (124) sont aussi grandes que les premières largeurs (122) et/ou
- les troisièmes largeurs (124) sont aussi grandes que les deuxièmes largeurs (123).

3. Procédé suivant l'une des revendications précédentes 1 à 2, dans lequel les premiers signaux (119) ont des premiers changements (106, 109) d'état et les deuxièmes signaux (120) des deuxièmes changements (110, 112) d'état et les troisièmes signaux (121) des troisièmes changements (107, 108) d'état.

4. Procédé suivant la revendication 3, dans lequel le troisième canal (103) n'a, à un instant déterminé, un troisième changement (107, 108) d'état que si le premier canal (101) est, à cet instant, sans l'un des premiers changements (109) d'état et le deuxième canal (102) est, à cet instant, sans l'un des deuxièmes changements (110, 112, 114) d'état.

5. Procédé suivant la revendication 3 ou 4, dans lequel
- il y a un troisième changement (107, 108) d'état entre deux premiers changements (106, 117, 118) d'état voisins, dans le cas où les troisièmes signaux (105) remplacent, aux instants déterminés à l'avance, les deuxièmes signaux (120), ou
- il y a un troisième changement (107, 108) d'état entre deux deuxièmes changements d'état voisins, dans le cas où les troisièmes signaux (105) remplacent, aux instants déterminés à l'avance, les premiers signaux (119).

6. Procédé suivant l'une des revendications précédentes, dans lequel le procédé comprend, en outre, une exploitation de l'information de mesure, dans lequel, pour l'exploitation, une détection simultanée des signaux (119, 120, 121) des trois canaux (101, 102, 103) a lieu.

7. Procédé suivant la revendication 6, dans lequel l'exploitation comprend une première exploitation des premiers changements (106, 109, 117, 118) d'état et une deuxième exploitation des deuxièmes changements (110, 112, 113, 114) d'état et une troisième exploitation des troisièmes changements (107, 108) d'état des signaux détectés, dans lequel
- la troisième exploitation est identique à la première exploitation, dans le cas où les troisièmes signaux (105) remplacent, aux instants déterminés à l'avance, les premiers signaux (119), ou
- la troisième exploitation est identique à la deuxième exploitation, dans le cas où les troisièmes signaux (105) remplacent, aux instants déterminés à l'avance, les deuxièmes signaux (120).

8. Procédé d'exploitation d'informations de mesure codées sur des états de position relatifs d'objets mobiles, dans lequel les informations de mesure sont codées en code Gray suivant la revendication 1, dans lequel le procédé comprend une réception des informations de mesure et une exploitation des informations de mesure, la réception des informations de mesure s'effectuant par une détection simultanée des signaux (119, 120, 121) des trois canaux (101, 102, 103).

9. Produit de programme d'ordinateur ayant des instructions pouvant être exécutées par un processeur pour effectuer des stades du procédé suivant les revendications précédentes.

10. Dispositif de codage d'informations de mesure sur des états de position relatifs d'objets mobiles en code Gray au moyen de trois canaux (101, 102, 103), dans lequel
- le premier canal (101) des trois canaux (101, 102, 103) a des premiers signaux (119),
- le deuxième canal (102) des trois canaux (101, 102, 103) a des deuxièmes signaux (120),
- le troisième canal (103) des trois canaux (101, 102, 103) a des troisièmes signaux (121),
dans lequel les troisièmes signaux (121) comprennent exclusivement des signaux (105), qui, à des instants déterminés à l'avance, remplacent identiquement les premiers signaux (119) ou les deuxièmes signaux (120), les troisièmes signaux (121) décrivant, à ces instants déterminés à l'avance, un point de référence, le point de référence étant un point de repère pour les états de position relatifs.

11. Dispositif d'exploitation d'informations de mesure codées sur des états de position relatifs d'objets mobiles, les informations de mesure étant codées en code Gray au moyen de trois canaux (101, 102, 103), dans lequel
- le premier canal (101) des trois canaux (101, 102, 103) a des premiers signaux (119),
- le deuxième canal (102) des trois canaux (101, 102, 103) a des deuxièmes signaux (120),
- le troisième canal (103) des trois canaux (101, 102, 103) a des troisièmes signaux (121),
dans lequel les troisièmes signaux (121) comprennent exclusivement des signaux (105), qui, à des instants déterminés à l'avance, remplacent identiquement les premiers signaux (119) ou les deuxièmes signaux (120), les troisièmes signaux (121) décrivant, à ces instants déterminés à l'avance, un point de référence, le point de référence étant un point de repère pour les états de position relatifs, dans lequel le dispositif est constitué pour recevoir les informations de mesure et exploiter les informations de mesure, le dispositif étant constitué, en outre, pour effectuer la réception des informations de mesure par une détection simultanée des signaux (119, 120, 121) des trois canaux (101, 102, 103).
